# EUROPÄISCHE PATENTANMELDUNG

(11) **EP 3 738 722 A1**
(43) Veröffentlichungstag der Anmeldung: **18.11.2020**
(21) Anmeldenummer: 19173999.4
(22) Anmeldetag: 13.05.2019
(51) Int. Cl.: B25J 9/16

(54) **PLANUNG VON TRAJEKTORIEN FÜR DIE PRODUKTION VON WERKSTÜCKEN**

(71) Anmelder: Siemens Aktiengesellschaft, 80333 München (DE)
(72) Erfinder: Herz, Matthias, 85635 Siegertsbrunn (DE); Mayer, Hermann Georg, 83209 Prien am Chiemsee (DE); Paffrath, Meinhard, 85622 Feldkirchen (DE); Sohr, Annelie, 81929 München (DE); Wincheringer, Christoph, 81369 München (DE)

(57) **Zusammenfassung**

Die Erfindung gibt ein Verfahren zur Planung von ersten Trajektorien einer Produktionsmaschine für die Produktion von zukünftig zu produzierenden Werkstücken auf Basis eines dreidimensionalen Modells eines ersten Werkstücks. Die Maschinenparameter einer ersten Trajektorie werden in einer Produktionsmaschine ausgeführt und eine zweite Trajektorie durch ein Messsystem ermittelt, wobei die zweite Trajektorie die Ausführung der ersten Trajektorie ist. Abweichungen zwischen der ersten Trajektorie und der zweiten Trajektorie werden gemessen und Zusammenhänge zwischen den Maschinenparametern und den Abweichungen angelernt. Die gelernten Zusammenhänge werden zur Planung neuer erster Trajektorien von zukünftig zu produzierenden Werkstücken angewandt.

## Beschreibung

### HINTERGRUND DER ERFINDUNG

### Gebiet der Erfindung

Die vorliegende Erfindung betrifft ein Verfahren zur Planung von ersten Trajektorien einer Produktionsmaschine für die Produktion von zukünftig zu produzierenden Werkstücken. Außerdem gibt die Erfindung eine Produktionsmaschine, ein Computerprogrammprodukt und ein computerlesbares Medium an.

### Beschreibung des Stands der Technik

Für viele Produktionsverfahren ist es erforderlich, dass Maschinen eine vorberechnete Trajektorie mit einem montierten Werkzeug abfahren. Dies kann z.B. ein Fräser sein, der auf einen Mehrachsmechanismus montiert ist, oder ein Druckkopf, der sich in einer Portalkonstruktion verfahren lässt. In der Regel weicht dabei die tatsächlich gefahrene Trajektorie von der berechneten ab. Je nach Verfahren ergeben sich dadurch wesentliche Einbußen für die Qualität des Produkts oder zusätzliche Kosten für das Verfahren.

Zur Lösung oder Abmilderung des o.g. Problems gibt es verschiedenen Strategien: Zum einen wird mit hohem technischem Aufwand versucht, die Absolutgenauigkeit von Maschinen zu verbessern. So erreichen Mehrachsfräsmaschinen durch massive Bauweise und genaue Sensorik heute eine Genauigkeit im Mikrometerbereich. Trotzdem kann diese Genauigkeit nur unter Einhaltung bestimmter Betriebsparametern erreicht werden (Temperatur, Vibrationen der Umgebung, Materialqualität des Werkstücks o.ä.).

Eine andere Strategie, um die Genauigkeit zu verbessern, besteht darin, die Trajektorien direkt am Gerät vorzugeben.

Dies wird so beispielsweise für Schweißpunkte praktiziert, die ein Roboter anfahren muss (TeachIn). Dabei kommt es dann nur noch auf die Wiederholgenauigkeit des Geräts an, die in der Regel deutlich besser ist als dessen Absolutgenauigkeit. Allen Verfahren gemeinsam ist jedoch, dass sie mit zusätzlichem Aufwand und damit Kosten verbunden sind. Im Allgemeinen steigen die Kosten für ein Gerät mit höherer Genauigkeitsklasse deutlich an. Ziel ist es daher auch für vergleichsweise günstige Geräte (wie z.B. Industrie-Roboter oder günstige Linienportale) eine hohe Genauigkeit zu erreichen.

### ZUSAMMENFASSUNG DER ERFINDUNG

Die Aufgabe der Erfindung besteht darin, eine alternative Lösung zum Stand der Technik bei der Produktion von Werkstücken bereitzustellen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, durch eine kostengünstiges Messsystem Abweichungen bei der Produktion von Werkstücken zu erfassen und die Zusammenhänge zwischen den gemessenen Abweichungen und den verwendeten Maschinenparametern zu lernen, um zukünftige Produktionsprozesse zu verbessern.

Die Erfindung beansprucht ein Verfahren zur Planung von ersten Trajektorien einer Produktionsmaschine für die Produktion von zukünftig zu produzierenden Werkstücken,
mit den Schritten:
- Erstellen eines dreidimensionalen Modells eines ersten Werkstücks,
- Extrahieren von Modellmerkmalen aus dem dreidimensionalen Modell,
- Erstellen des durch zumindest eines bestimmten Teils der Modellmerkmale bestimmten Merkmalsraum,
- Erstellen der ersten Trajektorie für den Produktionsprozess auf Basis des dreidimensionalen Modells und des Merkmalsraums,
- Umwandlung der ersten Trajektorie in Maschinenparameter und Transformation der ersten Trajektorie in den Merkmalsraum,
- Ausführen der ersten Trajektorie durch Ausführen der Maschinenparameter in der Produktionsmaschine,
- Ermittlung einer zweiten Trajektorie durch ein Messsystem, wobei die zweite Trajektorie die Ausführung der ersten Trajektorie ist,
- Ermittlung der Abweichungen zwischen der ersten Trajektorie und der zweiten Trajektorie,
- Lernen der Zusammenhänge zwischen den Maschinenparametern und den Abweichungen und
- Verwenden der gelernten Zusammenhänge zur Planung neuer erster Trajektorien von zukünftig zu produzierenden Werkstücken.

Das Messsystem ist mit einer entsprechenden Sensorik versehen, mit der Fehler gemessen werden können. Um die Genauigkeitsanforderungen an das Messsystem seinerseits gering zu halten, werden bei der Planung der ersten Trajektorie Messpunkte definiert, die durch die Sensorik des Messsystems leicht gefunden und analysiert werden können.

Dazu wird zunächst ein dreidimensionales Modell des ersten Werkstücks analysiert. Das dreidimensionale Modell wird entweder direkt mit dem Messsystem generiert (dreidimensionaler (3D) Scan) oder steht als 3D CAD Modell zur Verfügung. In dem dreidimensionalen Modell werden nun markante Modellmerkmale (Features) definiert (extrahiert und selektiert), die durch das Messsystem leicht gefunden werden können (i.d.R. kantenbasierte Features).

Die (definierten) Modellmerkmale können dabei bereits auf dem Rohling für das zu produzierende Werkstück vorhanden sein oder aber erst durch das Produktionsprozess entstehen (z.B. eine gefräste Nut, die als Referenzlinie für nachgelagerte Produktionsprozesse dient und/ oder markante Messpunkte, die durch das Messsystem leicht gefunden und analysiert werden können).

Außerdem wird die erste Trajektorie für den Produktionsprozess auf Basis des dreidimensionalen Modells und des Merkmalsraums und Umwandlung der ersten Trajektorie in Maschinenparameter erzeugt. Für jeden Punkt der ersten Trajektorie werden dabei die entsprechenden Maschinenparameter an der Produktionsmaschine vorausberechnet (z.B. Vorwärtskinematik der Freiheitsgrade, Drehzahl und Art des Werkzeugs, simulierte Kräfte auf das Werkstück etc.).

Danach wird jeder Punkt der ersten Trajektorie (oder eine sinnvolle Auswahl von Punkten) in ein durch die festgelegten Modellmerkmale bestimmtes System transformiert. Wurde als Modellmerkmal z.B. die Kante [AB] zwischen den Punkten A und B festgelegt, so kann jeder Punkt der ersten Trajektorie durch den Abstand von den Punkte A und B charakterisiert werden, oder durch den Abstand von A und den Winkel zu [AB] etc. Die Abbildung muss nicht eineindeutig (bijektiv) sein.

Wird nun die erste Trajektorie ausgeführt, so werden die Modellmerkmale des Merkmalsraums in Maschinenparameter umgewandelt und von der Maschine umgesetzt. Dadurch entsteht die tatsächlich ausgeführte Trajektorie, die zweite Trajektorie, die von der Sensorik des Messsystems beobachtet und gemessen werden kann. Dabei werden die tatsächlichen Modellmerkmale gemessen, die möglichst gut den (definierten) Modellmerkmalen entsprechen sollen.

Die Abweichungen zwischen der ersten Trajektorie und der zweiten Trajektorie wird dabei im Merkmalsraum berechnet. Nachdem die Abweichung für viele Punkte/ Modellmerkmale bestimmt wurde, kann der Zusammenhang zwischen Abweichung und Maschinenparametern erlernt werden. Dies kann z.B. durch das Training eines neuronalen Netzwerks erfolgen. Während des Trainings soll dabei eine möglichst gute Abdeckung des Zustandsraums der Maschine erreicht werden. Dies kann u.a. durch künstliche Trainingsbeispiele erreicht werden (z.B. durch Verschieben/ Drehen des Werkstücks bei einer beobachteten Serienfertigung).

Wurde das neuronale Netz mit einer ausreichenden Zahl an Trainingsdaten angepasst, so können die gewonnenen Erkenntnisse auf neue Anwendungsszenarien (Produktion von zukünftig zu produzierenden Werkstücken in der Produktionsmaschine) übertragen werden. Dabei wird zunächst eine neue erste Trajektorie relativ zu neuen Modellmerkmalen berechnet. Für jeden Punkt der neuen ersten Trajektorie werden wieder die zugehörigen neuen Maschinenparameter bestimmt. Mit Hilfe der neuen Maschinenparameter als Eingabe kann nun eine Fehlerkorrektur aus dem neuronalen Netz bestimmt werden und die neue erste Trajektorie entsprechend angepasst werden. Es wird erwartet, dass die so ausgeführte neue zweite Trajektorie besser mit der geplanten ersten Trajektorie übereinstimmt als ohne Fehlerkorrektur. Die ausgeführte neue zweite Trajektorie wird wieder durch das Messsystem beobachtet und mit dem verbleibenden Fehler wird wieder wie oben beschrieben verfahren. Dadurch wird der Produktionsprozess der Produktionsmaschine mit der Zeit immer besser und erreicht damit eine höhere Genauigkeitskategorie als mit einer (kostengünstigen) Ausstattung ursprünglich möglich gewesen wäre.

In einer weiteren Ausgestaltung wird der Teil der Modellmerkmale automatisch aus dem dreidimensionalen Modell anhand von Optimierungskriterien bestimmt. Es erfolgt eine Auswahl gut erkennbarer Modellmerkmale (Features). Das hat den Vorteil eines robusten Messvorgangs. Es kann z.B. bevorzugt eine lange Distanz zwischen zwei Eckpunkten anstatt einer Distanz, die so kurz ist, dass sie im Auflösungsbereich des MessSystems liegt, gemessen werden. Die Bestimmung der optimalen Messpunkte kann z.B. an einem CAD-Modell automatisch vorgenommen werden. Es kann z.B. ein Optimierungsproblem aufgestellt und gelöst werden.

Zum Aufstellen des Optimierungsproblems werden zunächst alle relevanten Features/ Modellmerkmale aus dem dreidimensionalen Modell des zu fertigenden Produkts/ zu produzierenden Werkstücks extrahiert. Im Allgemeinen kann dies anhand der Normaleninformation auf der Objektoberfläche erfolgen. Dazu muss das dreidimensionale Modell ggf. zunächst mittels einer Boundary Representation (BREP) dargestellt werden. Unstetigkeiten im Normalenverlauf werden dabei mit einer Wertzahl versehen, indem der Winkelsprung zu allen angrenzenden Tessellierungs-Elementen aufmultipliziert wird. Nun wird die vom Roboter/ dem Messystem abzufahrende Trajektorie in das Modell eingefügt und gesampelt (z.B. im Abstand von 1 mm). Für jeden der so entstandenen Punkte wird jeweils der Abstand zu den zuvor ermittelten Features/ Modellmerkmalen berechnet. Der Abstand zu Features/ Modellmerkmalen, die beim Anfahren des entsprechenden Punkts nicht sichtbar sind, wird auf 0 gesetzt. Alle anderen Abstände werden mit der o.g. Wertzahl des Features/ Modellmerkmales multipliziert. Ziel ist es nun durch die Position-Feature Matrix einen Weg mit möglichst großer Wertsumme zu finden. Als Nebenbedingung sollen zwei benachbarte Punkte aber möglichst nicht gegen dasselbe Feature/ Modellmerkmale gemessen werden. Dies kann durch einen Strafterm der Form: Wertzahl = Wertzahl ^{∗} (max(n, Abstand zur letzten Verwendung des Features) / n) erreicht werden. D.h. erst nach der Verwendung von n anderen Features/ Modellmerkmalen kann das betroffene Feature/ Modellmerkmale wieder mit demselben Wert berechnet werden.

In einer weiteren Ausgestaltung beinhalten die Maschinenparameter die Vorwärtskinematik der Freiheitsgrade des Werkzeugs, die Drehzahl und Art des Werkzeugs und/ oder die simulierten Kräfte auf das Werkstück.

In einer weiteren Ausgestaltung erfolgt das Lernen in einem neuronalen Netz.

In einer weiteren Ausgestaltung erfolgt das Lernen zusätzlich an künstlichen Trainingsbeispielen. Das hat den Vorteil, dass eine möglichst breite Abdeckung des Zustandsraums der Produktionsmaschine erreicht wird. Beispiele für künstliche Trainingsbeispiele sind Verschieben/ Drehen des Werkstücks bei einer beobachteten Serienfertigung etc.

In einer weiteren Ausgestaltung wird das dreidimensionale Modell des ersten Werkstücks mit dem Messsystem oder durch CAD-Modellierung ermittelt.

In einer weiteren Ausgestaltung weist das Messsystem Sensorik zur Distanzmessung auf.

Die Erfindung beansprucht außerdem eine Produktionsmaschine aufweisend ein Messsystem und eine Recheneinheit,
wobei die Recheneinheit ausgebildet ist ein Verfahren zur Planung von ersten Trajektorien der Produktionsmaschine für die Produktion von zukünftig zu produzierenden Werkstücken auszuführen,
wobei das Verfahren die folgenden Schritte aufweist:
- Erstellen eines dreidimensionalen Modells eines ersten Werkstücks,
- Extrahieren von Modellmerkmalen aus dem dreidimensionalen Modell,
Erstellen des durch zumindest eines bestimmten Teils der Modellmerkmale bestimmten Merkmalsraum,
- Erstellen der ersten Trajektorie für den Produktionsprozess auf Basis des dreidimensionalen Modells und des Merkmalsraums,
- Umwandlung der ersten Trajektorie in Maschinenparameter und Transformation der ersten Trajektorie in den Merkmalsraum,
- Ausführen der ersten Trajektorie durch Ausführen der Maschinenparameter in der Produktionsmaschine,
- Ermittlung einer zweiten Trajektorie durch ein Messsystem, wobei die zweite Trajektorie die Ausführung der ersten Trajektorie ist,
- Ermittlung der Abweichungen zwischen der ersten Trajektorie und der zweiten Trajektorie,
- Lernen der Zusammenhänge zwischen den Maschinenparametern und den Abweichungen und
- Verwenden der gelernten Zusammenhänge zur Planung neuer erster Trajektorien von zukünftig zu produzierenden Werkstücken.

In einer weiteren Ausgestaltung ist die erfindungsgemäße Produktionsmaschine, ausgebildet ein erfindungsgemäßes Verfahren auszuführen.

In einer weiteren Ausgestaltung kann die Produktionsmaschine ein Produktionsroboter sein.

Die Erfindung beansprucht außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung beansprucht außerdem computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Im Gegensatz zu den bisherigen Lösungen (s.o.) kommt die vorgeschlagene Lösung ohne technische Änderungen an den beteiligten Produktionsmaschine oder Änderungen am Produktionsprozess aus (abgesehen von ggf. generierten künstlichen Trainingsbeispielen). Dadurch können Produktionsmaschine für andere Aufgaben, als für die sie eigentlich konzipiert wurden, eingesetzt werden (z.B. 3D-Druck mit Produktionsroboter). Die Implementierung des Verfahrens kann durch ein zusätzliches Computerprogramm, das auf der Recheneinheit der Produktionsmaschine läuft, erfolgen. Das Messsystem, um die Modellmerkmalen im Merkmalsraum zu erstellen, kann nach erfolgreicher Programmierung der Recheneinheit (abgeschlossenes Lernen/ Training) in einem anderen System/ Produktionsmaschine wiederverwendet werden oder es kann temporär beschafft (gemietet, geleast) werden, d.h. die Kosten fallen anteilig nur in der Trainingsphase/ während dem Lernen an.

Je nachdem wo die Datenhaltung und das Lernen/ Training erfolgen, sind durch das Verfahren neue Geschäftsmodelle denkbar. So können die gelernten Zusammenhänge durch den Hersteller des Computerprogramms extern verarbeitet werden und dann die Erhöhung der Genauigkeitsklasse dem Betreiber der Produktionsmaschine als zusätzliche Leistung angeboten werden (Umsetzung mit IoT-Plattformen).

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: den Ablauf des Verfahrens,
- Fig. 2: das Extrahieren von Modellmerkmalen aus einem dreidimensionalen Modell,
- Fig. 3: das Erstellen und Ausführen der ersten Trajektorie anhand des Merkmalsraums,
- Fig. 4: das Lernen von Zusammenhängen auf Basis von Abweichungen und
- Fig. 5: die korrigierte Planung neuer Trajektorien.

### DETAILLIERTE BESCHREIBUNG DER ERFINDUNG

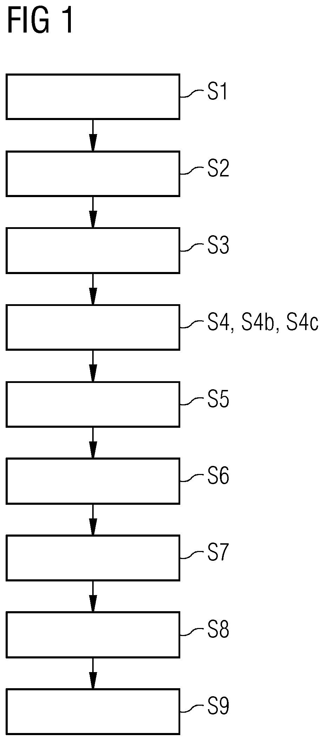

Fig. 1 zeigt den Ablauf des erfindungsgemäßen Verfahrens zur Planung von ersten Trajektorien einer Produktionsmaschine für die Produktion von zukünftig zu produzierenden Werkstücken. Das Verfahren zeigt die Schritte:
- Erstellen eines dreidimensionalen Modells S1 eines ersten Werkstücks,
- Extrahieren von Modellmerkmalen S2 aus dem dreidimensionalen Modell,
- Erstellen des durch zumindest eines bestimmten Teils der Modellmerkmale bestimmten Merkmalsraum S3,
- Erstellen der ersten Trajektorie S4 für den Produktionsprozess auf Basis des dreidimensionalen Modells und des Merkmalsraums
- Umwandlung der ersten Trajektorie S4b in Maschinenparameter und Transformation S4c der ersten Trajektorie T in den Merkmalsraum FS,
- Ausführen der ersten Trajektorie S5 durch Ausführen der Maschinenparameter in der Produktionsmaschine,
- Ermittlung einer zweiten Trajektorie S6 durch ein Messsystem, wobei die zweite Trajektorie die Ausführung der ersten Trajektorie ist,
- Ermittlung der Abweichungen S7 zwischen der ersten Trajektorie und der zweiten Trajektorie,
- Lernen der Zusammenhänge S8 zwischen den Maschinenparametern und den Abweichungen und
- Verwenden der gelernten Zusammenhänge zur Planung neuer erster Trajektorien S9 von zukünftig zu produzierenden Werkstücken.

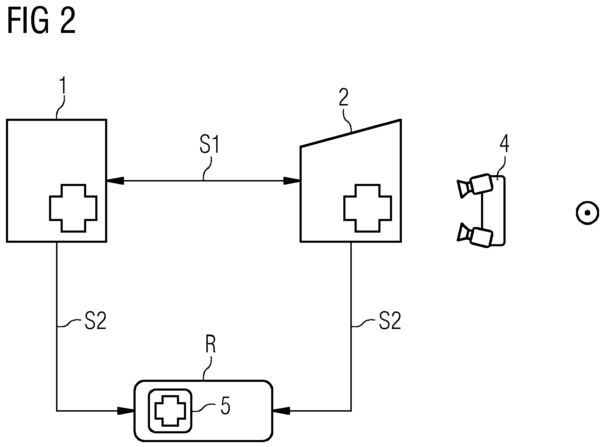

Die folgenden Figuren Fig. 2 bis Fig. 5 zeigen die Schritte des Verfahrens im Detail.

Fig. 2 zeigt das Extrahieren S1 von Modellmerkmalen aus einem dreidimensionalen Modell 5 des zu fertigenden Werkstücks. Das dreidimensionale Modell 5 wird entsprechend des zu fertigenden Werkstücks kalibriert. Das dreidimensionale Modell 5 kann zum Beispiel ein 3D-CAD-Modell 1, das durch CAD-Modellierung bereitgestellt wird oder ein 3D-Scan 2, der durch ein Messsystem bereitgestellt wird, sein.

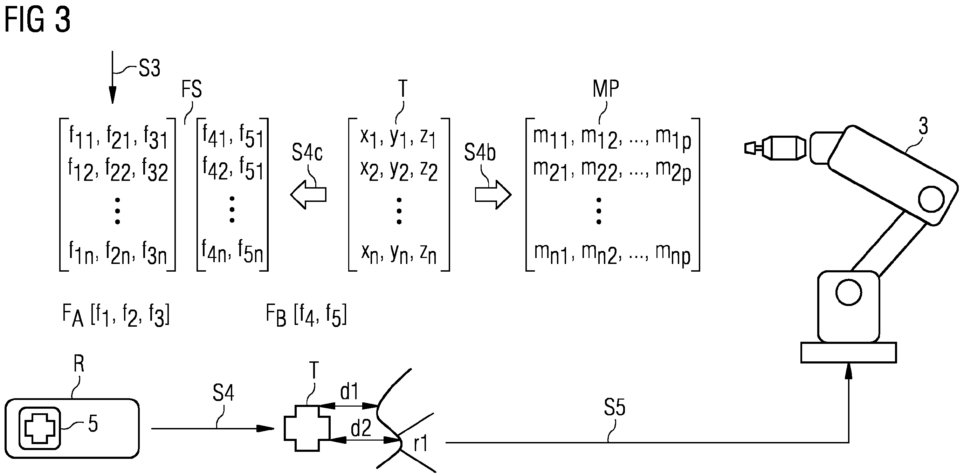

Anschließend werden die Modellmerkmalen (fᵢ, erst in Fig. 3 dargestellt) aus dem dreidimensionalen Modell 5 extrahiert S2 und einer Recheneinheit R bereitgestellt.

Die darauffolgenden Schritte sind in Fig. 3 dargestellt. Die Recheneinheit R verwendet die Modellmerkmale fᵢ (Bestandteil von z.B. der Modellmerkmalskombination F_{A} und der Modellmerkmalskombination F_{B}, wobei jedes Modellmerkmal Modellmerkmalsausprägungen fᵢᵢ aufweist) zum Erstellen S3 des durch zumindest eines bestimmten Teils der Modellmerkmale fᵢ bestimmten Merkmalsraum FS.

Außerdem wird die erste Trajektorie T für den Produktionsprozess auf Basis des dreidimensionalen Modells 5 und des Merkmalsraums FS erstellt S4 und die erste Trajektorie T in Maschinenparameter mᵢᵢ des Maschinenparameterraum MP umgewandelt S4b. Die erste Trajektorie T weist erste Trajektoriekoordinaten xᵢ, zweite Trajektoriekoordinaten und yᵢ dritte Trajektoriekoordinaten zᵢ auf. Für das Erstellen der ersten Trajektorie S4 werden z.B. Maße von ersten Abständen dᵢ und ersten Radien rᵢ am dreidimensionalen Modell 5 verwendet.

Außerdem erfolgt eine Transformation S4c der ersten Trajektorie T in den Merkmalsraum FS.

Anschließend folgt das Ausführen der ersten Trajektorie S5 durch Ausführen der Maschinenparameter mᵢᵢ in der Produktionsmaschine 3.

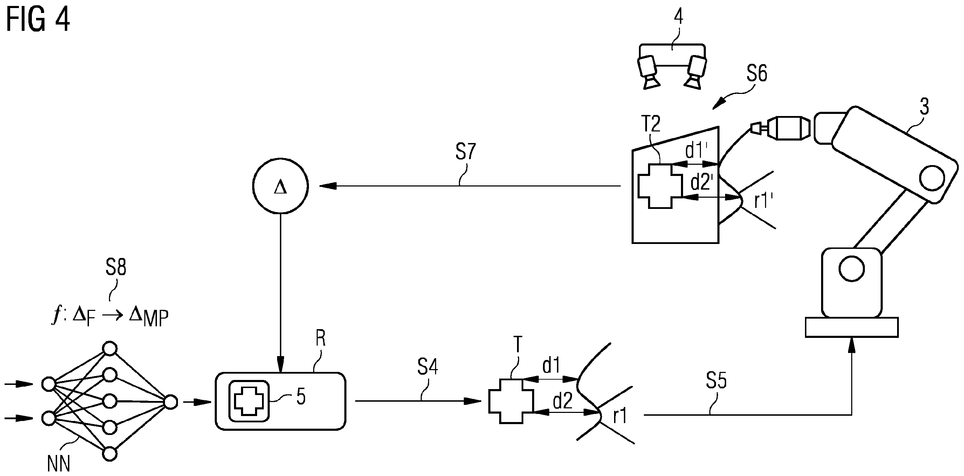

Fig. 4 zeigt das Lernen von Zusammenhängen auf Basis von Abweichungen. Wie bereits in Fig. 3 dargestellt wird die erste Trajektorie T für den Produktionsprozess auf Basis des dreidimensionalen Modells 5 und des Merkmalsraums FS durch die Recheneinheit R erstellt S4. Für das Erstellen S4 der ersten Trajektorie T werden z.B. Maße von ersten Abständen dᵢ und ersten Radien rᵢ am dreidimensionalen Modell 5 verwendet.

Anschließend folgt das Ausführen S5 der ersten Trajektorie T durch Ausführen der Maschinenparameter mᵢᵢ in der Produktionsmaschine 3.

Anschließend folgt die Ermittlung S6 einer zweiten Trajektorie T2 durch ein Messsystem 4, wobei die zweite Trajektorie T2 die Ausführung der ersten Trajektorie T ist. Durch das Messsystem 4 werden zweite Abstände dᵢ' und zweite Radien rᵢ' gemessen, welche die zweite Trajektorie T2 definieren.

Anschließend erfolgt die Ermittlung der Abweichungen S7 (Abweichungen Δᵢ) zwischen der ersten Trajektorie T und der zweiten Trajektorie T2.

Anschließend erfolgt das Lernen der Zusammenhänge S8 zwischen den Maschinenparametern mᵢᵢ und den Abweichungen Δᵢ. Das Lernen der Zusammenhänge S8 kann in einem neuronalem Netz NN erfolgen. Das neuronale Netz NN erhält die gemessenen Fehler als Eingabe (angebeutet durch die auf das Neuroanal Netz NN zeigenden Pfeile) und produziert daraus eine Abbildung auf die vorliegenden Maschinenparameter mᵢᵢ. So können die Zusammenhänge zwischen Abweichungen von den geplanten Modellmerkmalen Δ_{F} und den Maschinenparametern mᵢᵢ gelernt werden und für zukünftige Produktionsprozess Abweichungen der Maschinenparameter Δ_{MP} verwendet werden.

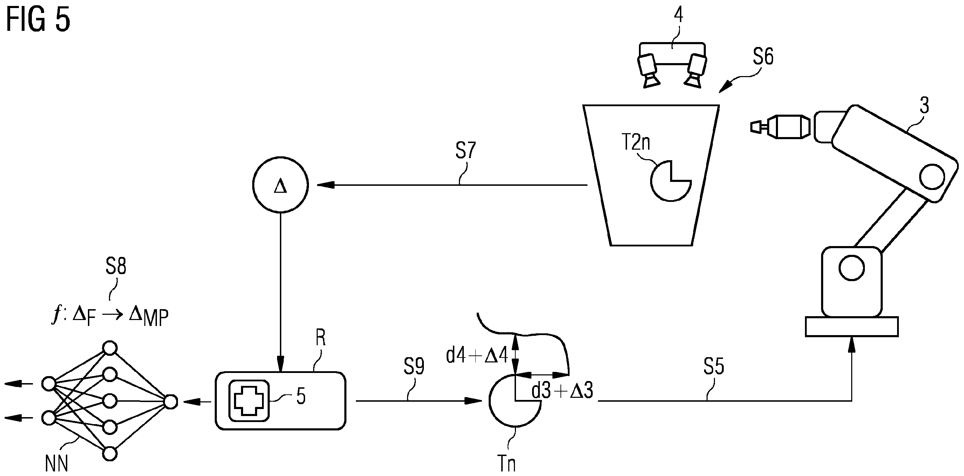

Fig. 5 zeigt zusätzlich zu bisher gezeigten Schritten des Verfahrens die korrigierte Planung neuer erster Trajektorien Tn. Es erfolgt ein Verwenden der gelernten Zusammenhänge zur Planung S9 neuer erster Trajektorien Tn von zukünftig zu produzierenden Werkstücken.

Es wird eine neue erste Trajektorie Tn für den Produktionsprozess auf Basis des dreidimensionalen Modells und des Merkmalsraums FS durch die Recheneinheit R erstellt (wie zuvor in S4). Für das Erstellen der neuen ersten Trajektorie S4 werden z.B. Maße von ersten Abständen dᵢ und ersten Radien rᵢ, die um Abweichungen Δᵢ korrigiert wurden, verwendet.

Anschließend folgen die Schritte des Verfahrens wie bereits in Fig. 4 vorgestellt mit dem Unterschied, dass eine neue zweite Trajektorie T2n vermessen wird. Es wird erwartet, dass die so ausgeführte neue zweite Trajektorie T2n besser mit der geplanten ersten Trajektorie T übereinstimmt als ohne Fehlerkorrektur. Außerdem zeigen die Pfeile in Fig. 5 anders als in Fig. 4 vom neuronalem Netz NN weg. In Fig. 4 erfolgt das Lernen, d.h. das neuronale Netz erhält die gemessenen Fehler als Eingabe und produziert daraus eine Abbildung auf die vorliegenden Maschinenparameter mᵢᵢ. In Fig. 5 ist die Abbildung des neuronalen Netzes NN invertiert, d.h. es werden für die Maschinenparameter mᵢᵢ, die in der neuen (unbekannten und nicht vermessenen) Produktionsumgebung zur Fertigung des Teils nötig sind, die zu erwartenden Fehler/ Abweichungen Δᵢ berechnet und entsprechend kompensiert.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- S1: Erstellen eines dreidimensionalen Modells
- S2: Extrahieren von Modellmerkmalen
- S3: Erstellen des Merkmalsraum
- S4: Erstellen der ersten Trajektorie
- S4b: Umwandlung der ersten Trajektorie
- S4c: Transformation der ersten Trajektorie
- S5: Ausführen der ersten Trajektorie
- S6: Ermittlung der zweiten Trajektorie
- S7: Ermittlung der Abweichungen
- S8: Lernen von Zusammenhängen
- S9: Planung neuer erster Trajektorien

- dᵢ: erste Abstände
- dᵢ': zweite Abstände
- Fᵢ: Modellmerkmalskombinationen
- F_{A}: Modellmerkmalskombination A
- F_{B}: Modellmerkmalskombination B
- fᵢ: Modellmerkmale
- fᵢᵢ: Modellmerkmalsausprägungen
- FS: Merkmalsraum
- MP: Maschinenparameterraum
- mᵢᵢ: Maschinenparameter
- NN: Neuronales Netz
- R: Recheneinheit
- rᵢ: erste Radien
- rᵢ': zweite Radien
- T: erste Trajektorie
- Tn: neue erste Trajektorie
- T2: zweite Trajektorie
- T2n: neue zweite Trajektorie
- xᵢ: erste Trajektoriekoordinaten
- yᵢ: zweite Trajektoriekoordinaten
- zᵢ: dritte Trajektoriekoordinaten
- Δᵢ: Abweichungen

- 1: 3D-CAD-Modell
- 2: 3D-Scan
- 3: Produktionsmaschine
- 4: Messsystem
- 5: dreidimensionales Modell

## Patentansprüche

1. Verfahren zur Planung von ersten Trajektorien (T) einer Produktionsmaschine (3) für die Produktion von zukünftig zu produzierenden Werkstücken,
mit den Schritten:
- Erstellen (S1) eines dreidimensionalen Modells (5) eines ersten Werkstücks,
- Extrahieren (S2) von Modellmerkmalen (fᵢ) aus dem dreidimensionalen Modell (5),
- Erstellen (S3) des durch zumindest eines bestimmten Teils der Modellmerkmale (fᵢ) bestimmten Merkmalsraum (FS),
- Erstellen (S4) der ersten Trajektorie (T) für den Produktionsprozess auf Basis des dreidimensionalen Modells (5) und des Merkmalsraums (FS),
- Umwandlung (S4b) der ersten Trajektorie (T) in Maschinenparameter (mᵢᵢ) und Transformation (S4c) der ersten Trajektorie (T) in den Merkmalsraum (FS),
- Ausführen (S5) der ersten Trajektorie (T) durch Ausführen der Maschinenparameter (mᵢᵢ) in der Produktionsmaschine (3),
- Ermittlung (S6) einer zweiten Trajektorie (T2) durch ein Messsystem (4), wobei die zweite Trajektorie (T2) die Ausführung der ersten Trajektorie (T) ist,
- Ermittlung (S7) der Abweichungen (Δᵢ) zwischen der ersten Trajektorie (T) und der zweiten Trajektorie (T2),
- Lernen (S8) der Zusammenhänge zwischen den Maschinenparametern (mᵢᵢ) und den Abweichungen (Δᵢ) und
- Verwenden der gelernten Zusammenhänge zur Planung (S9) neuer erster Trajektorien (Tn) von zukünftig zu produzierenden Werkstücken.

2. Verfahren nach Anspruch 1,
wobei der Teil der Modellmerkmale (fᵢ) automatisch aus dem dreidimensionalen Modell (5) anhand von Optimierungskriterien bestimmt wird.

3. Verfahren nach einem der vorherigen Ansprüche,
wobei die Maschinenparameter (mᵢᵢ) die Vorwärtskinematik der Freiheitsgrade des Werkzeugs, die Drehzahl und Art des Werkzeugs und/ oder die simulierten Kräfte auf das Werkstück beinhalten.

4. Verfahren nach einem der vorherigen Ansprüche,
wobei das Lernen (S8) in einem neuronalen Netz (NN) erfolgt.

5. Verfahren nach Anspruch 4,
wobei für das Lernen (S8) zusätzlich an künstlichen Trainingsbeispielen erfolgt.

6. Verfahren nach einem der vorherigen Ansprüche,
wobei das dreidimensionale Modell (5) des ersten Werkstücks mit dem Messsystem (4) oder durch CAD-Modellierung ermittelt wird.

7. Verfahren nach einem der vorherigen Ansprüche,
wobei das Messsystem (4) Sensorik zur Distanzmessung aufweist.

8. Produktionsmaschine (3) aufweisend ein Messsystem (4) und eine Recheneinheit,
wobei die Recheneinheit ausgebildet ist ein Verfahren zur Planung von ersten Trajektorien (T) der Produktionsmaschine (3) für die Produktion von zukünftig zu produzierenden Werkstücken auszuführen,
wobei das Verfahren die folgenden Schritte aufweist:
- Erstellen (S1) eines dreidimensionalen Modells (5) eines ersten Werkstücks,
- Extrahieren (S2) von Modellmerkmalen (fᵢ) aus dem dreidimensionalen Modell (5),
- Erstellen (S3) des durch zumindest eines bestimmten Teils der Modellmerkmale (fᵢ) bestimmten Merkmalsraum (FS),
- Erstellen (S4) der ersten Trajektorie (T) für den Produktionsprozess auf Basis des dreidimensionalen Modells (5) und des Merkmalsraums (FS),
- Umwandlung (S4b) der ersten Trajektorie (T) in Maschinenparameter (mᵢᵢ) und Transformation (S4c) der ersten Trajektorie (T) in den Merkmalsraum (FS),
- Ausführen (S5) der ersten Trajektorie (T) durch Ausführen der Maschinenparameter (mᵢᵢ) in der Produktionsmaschine (3),
- Ermittlung (S6) einer zweiten Trajektorie (T2) durch ein Messsystem (4), wobei die zweite Trajektorie (T2) die Ausführung der ersten Trajektorie (T) ist,
- Ermittlung (S7) der Abweichungen (Δᵢ) zwischen der ersten Trajektorie (T) und der zweiten Trajektorie (T2),
- Lernen (S8) der Zusammenhänge zwischen den Maschinenparametern (mᵢᵢ) und den Abweichungen (Δᵢ) und
- Verwenden der gelernten Zusammenhänge zur Planung (S9) neuer erster Trajektorien (Tn) von zukünftig zu produzierenden Werkstücken.

9. Produktionsmaschine (3) nach Anspruch 8, ausgebildet ein Verfahren nach einem der Ansprüche 2 bis 7 auszuführen.

10. Produktionsmaschine (3) nach Anspruch 8 oder 9,
wobei die Produktionsmaschine (3) ein Produktionsroboter ist.

11. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 7 ausgeführt werden, wenn das Computerprogramm auf der Recheneinheit ausgeführt wird.

12. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 7 ausgeführt werden, wenn das Computerprogramm auf der Recheneinheit ausgeführt wird.
